(19) Europäisches Patentamt
European Patent Office
Office européen des brevets

(11) EP 1 894 056 B1

(12) **EUROPÄISCHE PATENTSCHRIFT**

(45) Veröffentlichungstag und Bekanntmachung des Hinweises auf die Patenterteilung:
**27.07.2016 Patentblatt 2016/30**

(21) Anmeldenummer: **06724563.9**

(22) Anmeldetag: **25.04.2006**

(51) Int Cl.:
**G02C 7/02** (2006.01)

(86) Internationale Anmeldenummer:
**PCT/EP2006/003826**

(87) Internationale Veröffentlichungsnummer:
**WO 2006/122636 (23.11.2006 Gazette 2006/47)**

(54) **SERIE VON BRILLENGLÄSERN, VERFAHREN ZUR HERSTELLUNG**

SERIES OF SPECTACLE LENSES AND ASSOCIATED PRODUCTION METHOD

SERIE DE VERRES DE LUNETTES ET PROCEDE POUR LA PRODUIRE

(84) Benannte Vertragsstaaten:
**DE ES FR GB IT**

(30) Priorität: **19.05.2005 DE 102005023126**

(43) Veröffentlichungstag der Anmeldung:
**05.03.2008 Patentblatt 2008/10**

(73) Patentinhaber: **Rodenstock GmbH**
**80687 München (DE)**

(72) Erfinder:
• **ALTHEIMER, Helmut**
  **87650 Baisweil-Lauchdorf (DE)**
• **ESSER, Gregor**
  **80686 München (DE)**
• **BECKEN, Wolfgang**
  **82061 Neuried (DE)**
• **MÜLLER, Werner**
  **75443 Ötisheim (DE)**

(74) Vertreter: **Müller-Boré & Partner**
**Patentanwälte PartG mbB**
**Friedenheimer Brücke 21**
**80639 München (DE)**

(56) Entgegenhaltungen:
| | |
|---|---|
| EP-A2- 1 158 338 | DE-A1- 1 805 561 |
| DE-A1- 2 044 639 | DE-A1- 4 012 609 |
| DE-A1- 10 151 136 | DE-A1- 10 345 214 |
| DE-A1- 19 612 284 | GB-A- 1 369 380 |
| US-A- 3 960 442 | US-B2- 6 789 895 |

## Beschreibung

Die vorliegende Erfindung betrifft eine Serie von Brillengläsern sowie ein Verfahren zur Herstellung eines Brillenglases.

Herkömmliche Progressivgläser zeichnen sich dadurch aus, daß sie einen Bereich zum Sehen in die Ferne (im Folgenden Fernbereich) und einen Bereich zum Sehen in die Nähe (im Folgenden Nahbereich) aufweisen. Der Fernbereich ist in der Regel in einem oberen und der Nahbereich in einem unteren Bereich des Brillenglases angeordnet. Ein Fernbezugspunkt ist ein Punkt des Fernbereichs, an welchem die verordnete Fernwirkung, d.h. insbesondere die verordnete sphärische Wirkung erreicht wird. Ein Nahbezugspunkt ist ein Punkt des Nahbereichs, an welchem die Nahwirkung, d.h. die Fernwirkung plus Addition erreicht wird. In einem Prismenbezugspunkt wird die prismatische Wirkung, insbesondere das Prisma und Dickenreduktionsprisma erreicht.

Der Brechwert eines Progressionsglases steigt in einer sogenannten Übergangs- oder Progressionszone gleitend vom Fern- zum Nahbereich an. Der Anstieg des Brechwerts vom Fern- zum Nahbereich entspricht der Addition. In der Progressionszone ist es möglich, mittlere Entfernungen scharf zu sehen.

Es ist erkannt worden, daß bei der Herstellung von progressiven Brillengläsern das Flächendesign der progressiven Brillengläser stark von der Verordnung abhängt, insbesondere von der Basiskurve und der Addition. Die Flächeneigenschaften von Progressionsgläsern mit verschiedenen Verordnungen müssen sich stark unterscheiden, um in der Gebrauchsstellung, also in der Position, in der sich das Brillenglas vor einem Auge eines Brillenträgers befindet, gleiche Abbildungseigenschaften aufzuweisen. Bei zwei Brillengläsern gleicher Addition, aber unterschiedlichen sphärischen Verordnungen, unterscheiden sich die entsprechenden Hachen nicht nur im Hachenbrechwert, um die unterschiedliche Wirkung zu erzielen, sondern auch in dem Flächenastigmatismus, um unterschiedlichen Strahlengängen gerecht zu werden. Folglich wurden Verfahren entwickelt, um unabhängig von der Basiskurve gleich große Sehfehler zu erzielen. Weiterhin wurde erkannt, daß die Abbildungseigenschaften innerhalb einer Basiskurve auch sehr variieren, da aus einer Progressivfläche durch Variation der Rezeptfläche unterschiedliche sphärische und astigmatische Verordnungen erzeugt werden können. Um diese aber optimal durchführen zu können, müssen sich die Flächeneigenschaften der Progressivflächen ändern. Folglich wurden anstelle der einfach sphärischen und torischen Rezeptflächen atorische Rezeptflächen verwendet. Die notwendigen Flächenänderungen wurden mit der atorischen anstelle der progressiven Fläche erzeugt, um in der Gebrauchsstellung gleiche Eigenschaften zu erzielen.

Schließlich wurde auch erkannt, daß nicht nur die Verordnung, d.h. die gewünschte sphärische, zylindrische und prismatische Wirkung einen Einfluß auf die Gebrauchsstellung haben und durch die Gestaltung der Progressivfläche kompensiert werden müssen, sondern auch die Anordnung des Brillenglases vor dem Auge. Parameter, welche zusätzlich berücksichtigt wurden, waren Pupillendistanz, Hornhautscheitelabstand, Vorneigung des Brillenglases und Fassungsscheibenwinkel. Diese und weitere Parameter werden als Individualparameter zusammengefaßt. Die Berücksichtigung der Individualparameter hat dazu geführt, daß Progressivflächen progressiver Brillengläser individuell berechnet und gefertigt wurden.

Patentschrift US 3,960,442 offenbart eine Serie von Brillengläsern.

Es ist eine Aufgabe der vorliegenden Erfindung, Brillengläser bereitzustellen, welche dem Brillenträger ein verbessertes Sehempfinden ermöglichen.

Diese Aufgabe wird durch die Serie von Brillengläsern gemäß Anspruch 1 und das Verfahren zum Herstellen eines Brillenglases gemäß Anspruch 7 gelöst. Bevorzugte Ansprüche.

Gemäß einem Aspekt der vorliegenden Erfindung wird eine Serie von Brillengläsern bereitgestellt, wobei jedes Brillenglas der Serie eine augenseitige Fläche und eine objektseitige Fläche umfaßt;
die augenseitige und/oder die objektseitige Fläche jedes Brillenglases der Serie derart ausgelegt ist,
daß in Gebrauchsstellung der Brillengläser vor. Augen jeweiliger Brillenträger Sollvorgaben an Durchstoßpunkten erster Sehstrahlen mit jeweiligen augenseitigen oder objektseitigen Flächen der Brillengläser im wesentlichen identisch sind;
jeder erste Sehstrahl ein vorbestimmter, augenseitiger Sehstrahl ist, welcher einen Pupillenmittelpunkt und einen optischen Augendrehpunkt des jeweiligen Auges schneidet, und
alle ersten Sehstrahlen einen vorbestimmten, identischen augenseitigen Blickwinkel aufweisen;
die Sollvorgaben für jeden Durchstoßpunkt

- eine maximale zulässige Differenz zwischen einem vorgegebenen Wert einer sphärischen Brechkraft und einem tatsächlichen Wert einer sphärischen Brechkraft in Gebrauchsstellung, und/oder
- eine maximal zulässige Differenz zwischen einem vorgegebenen Wert eines Astigmatismus und einem tatsächlichen Wert eines Astigmatismus in Gebrauchsstellung, und/oder
- eine maximal zulässige Differenz zwischen einem vorgegebenen Wert einer Zylinderachslage und einem tatsächlichen Wert einer Zylinderachslage in Gebrauchsstellung

des jeweiligen Brillenglases der Serie umfassen.

Die verwendeten Fachbegriffe entsprechen den Fachbegriffen, wie sie in einschlägigen Normen, wie beispielsweise der DIN EN ISO 8624, der DIN 58208, der DIN EN ISO 13666, der DIN 5350 und der DIN EN ISO 8980-2 definiert sind. Ferner wird zusätzlich zu den genannten Normen auf Definitionen in dem Fachbuch "Die Optik des Auges und der Sehhilfen" von Dr. Roland Enders, 1995, Optische Fachveröffentlichung GmbH, Heidelberg, sowie in dem Fachbuch "Optik und Technik der Brille" von Heinz Diepes und Ralf Blendowski, 2002 Verlag Optische Fachveröffentlichung GmbH, Heidelberg, verwiesen. Die genannten Normen sowie die genannten Bücher stellen für die Begriffsdefinitionen insoweit einen integralen Offenbarungsbestandteil der vorliegenden Patentanmeldung dar.

Die Brillengläser einer Serie zeichnen sich somit dadurch aus, daß sie in jeweiliger Gebrauchsstellung für jeweilige erste Sehstrahlen, welche alle entlang von identischen augenseitigen Blickwinkeln verlaufen, im wesentliche identische Sollvorgaben erfüllen. Die Sollvorgaben jedes Brillenglases der Serie sind somit für einen ersten Sehstrahl mit vorbestimmtem identischen, augenseitigen Blickwinkel gleich. Die Sollvorgaben aller Brillengläser einer erfindungsgemäßen Serie sind somit für zumindest einen vorbestimmten augenseitigen Sehstrahl (erster Sehstrahl) im wesentlichen identisch, wobei im Bezugssystem des Brillenglases den jeweiligen Durchstoßpunkten des ersten Sehstrahls mit der augen- bzw. der objektseitigen Fläche des Brillenglases unterschiedliche Koordinaten zukommen können. Die Sollvorgaben der Brillengläser werden somit vorzugsweise nicht in Abhängigkeit von Koordinaten in dem Bezugssystem des Brillenglases vorgegeben, sondern in Gebrauchsstellung der Brillengläser lediglich in Abhängigkeit von augenseitigen Blickwinkeln.

Die Gebrauchsposition kann beispielsweise anhand einer standardisierten Gebrauchsposition festgelegt werden. Bei Verwendung von Brillengläsern der Serie gemäß einer standardisierten Gebrauchsstellung beträgt der Augendrehpunktabstand etwa 27,4 mm oder etwa 27,9 mm oder etwa 28,5 mm oder etwa 28,8 mm, die Vorneigung, d.h. der pantoskopische Winkel beträgt etwa 8°, der Fassungsscheibenwinkel beträgt etwa 0°, die Pupillendistanz beträgt etwa 63 mm, der Hornhautscheitelabstand beträgt etwa 15 mm, die Objektentfernung im Fernbezugspunkt beträgt etwa 0 dpt und die Objektentfernung im Nahbezugspunkt beträgt etwa -2,5 dpt.

Vorzugsweise ist die augenseitige und/oder objektseitige Fläche eines jeden Brillenglases der Serie von Brillengläsern derart ausgebildet, daß jedes Brillenglas vor genau einem Auge genau eines Brillenträgers anordenbar ist. Anhand einer derartigen Konfiguration der augenseitigen und/oder objektseitigen Fläche kann die obige Ausführung vereinfacht für einen ersten Sehstrahl dargestellt werden. Der erste Sehstrahl des Brillenträgers ist in einem ortsfesten Koordinatensystem eines Kopfes des Brillenträgers festgelegt. Der erste Sehstrahl ist vorzugsweise in Kugelkoordinaten in dem festen Koordinatensystem des Kopfes des Brillenträgers bestimmt. Der vorbestimmte augenseitige Blickwinkel entspricht den Kugelkoordinaten des Sehstrahls in dem Koordinatensystem des Kopfes des Brillenträgers. Die Kugelkoordinaten werden in herkömmlicher Weise bestimmt. Beispielsweise wird auf die Definition der Kugelkoordinaten in dem "Taschenbuch der Mathematik" von Dr. Helmut Wörle und Hans-Joachim Rumpf, 1992 R. Oldenburg Verlag GmbH, München, verwiesen, welche zur Definition der Kugelkoordinaten insoweit einen integralen Offenbarungsbestandteil der vorliegenden Patentanmeldung darstellt. Eine in dem "Taschenbuch der Mathematik" beschriebene Grundebene kann beispielsweise eine Ebene sein, welche durch zwei sich schneidende Geraden aufgespannt wird. Eine erste Gerade kann beispielsweise eine Verbindungsgerade zweier Pupillenmitten des Brillenträgers sein, wobei sich die Augen in einer Stellung befinden, in welcher der Brillenträger in Nullblickrichtung blickt. Alternativ kann die erste Gerade auch die Verbindungsgerade der beiden optischen Augendrehpunkte der beiden Augen des Brillenträgers sein. Die zweite Gerade kann beispielsweise eine die erste Gerade schneidende Gerade sein, welche parallel zu der Nullblickrichtung des Brillenträgers orientiert ist. Der in dem "Taschenbuch der Mathematik" weiterhin angegebene Grundstrahl kann beispielsweise ein Strahl sein, welcher ausgehend von dem optischen Augendrehpunkt eines Auges parallel zur Nullblickrichtung des Brillenträgers orientiert ist. Der Grundstrahl liegt daher in der Grundebene. Blickt der Brillenträger in Nullblickrichtung, entspricht der Grundstrahl dem ersten Sehstrahl. Blickt der Brillenträgern jedoch nicht in ivuübückrichtung, entspricht der erste Sehstrahl nicht dem Grundstrahl. Vielmehr schneidet der erste Sehstrahl die Grundebene. Die Blickwinkel entsprechen den Winkeln, wie sie in dem "Taschenbuch der Mathematik" dargestellt sind.

Die Pupillenmitte bzw. der Pupillenmittelpunkt im Sinne der Erfindung ist vorzugsweise der Mittelpunkt einer geometrischen Blende des Auges. Die Pupillenmitte bzw. der Pupillenmittelpunkt kann auch der Mittelpunkt einer sensorischen Blende des Auges sein. Weiterhin kann erfindungsgemäß die Pupillenmitte bzw. der Pupillenmittelpunkt der Apex der Kornea sein.

In anderen Worten werden die Blickwinkel eines Sehstrahls als Kugelkoordinaten des Sehstrahls in dem ortsfesten Koordinatensystem des Kopfes angegeben, wobei die Winkel aufgrund einer Grundebene und eines Grundstrahls des Koordinatensystems eindeutig bestimmt sind. Die Grundebene wird beispielsweise durch die beiden optischen Augendrehpunkte des Brillenträgers und die Nullblickrichtung bestimmt. Der Grundstrahl ist beispielsweise ein Sehstrahl in Nullblickrichtung. Die Kugelkoordinaten eines Sehstrahls sind Winkel, die der Sehstrahl mit der Grundebene und der Nullblickrichtung eingeht. Wird beispielsweise der Sehstrahl auf die Grundebene projiziert, ist eine Winkel der Kugelkoordinaten der Winkel zwischen der Projektion des Sehstrahls auf die Grundebene und dem Sehstrahl. Ein weiterer Winkel der Kugelkoordinaten ist der Winkel zwischen der Projektion des Sehstrahls auf die Grundebene und der Nullblickrichtung, wobei die Nullblickrichtung, der Sehstrahl und die Projektion des Sehstrahls auf die Grundebene jeweils den Augendrehpunkt schneiden. In anderen Worten sind die Kugelkoordinaten vorzugsweise anhand des Augendrehpunktes, der Nullblickrichtung und der beiden oben beschriebenen Winkel eindeutig bestimmt.

Vorteilhafterweise ist das Koordinatensystem im Bezugssystem des Kopfes des Brillenträgers ortsfest, d.h. bei Bewegung des Kopfes werden die Blickwinkelkoordinaten nicht verändert.

Beinhaltet die Serie von Briiengiäsern Brillengläser für eine Vielzahl von Brillenträgern, beispielsweise für fünf Brillenträger, wird für jeden Brillenträger im Bezugssystem eines Kopfes eines jeden Brillenträgers ein Koordinatensystem definiert. Bei fünf Brillenträgern existieren daher fünf unabhängige Koordinatensysteme. Weiterhin wird für jedes Brillenglas, welches vor einem Auge eines der Brillenträger angeordnet wird, ein erster Durchstoßpunkt bestimmt, an welchem der erste Sehstrahl die augenseitige bzw. die objektseitige Fläche des Brillenglases durchstößt. In anderen Worten wird in Koordinaten des jeweiligen Koordinatensystems eines jeden Brillenträgers ein erster Sehstrahl angegeben, wobei der erste Sehstrahl für jeden Brillenträger identische Blickwinkel aufweist, d.h. gleiche Koordinaten in Kugelkoordinaten in jedem der Koordinatensysteme eines jeden Brillenträgers. Anders ausgedrückt wird für jeden Brillenträger ein erster Durchstoßpunkt bestimmt, wobei der erste Durchstoßpunkt der Schnittpunkt des ersten Sehstrahls mit einer der Flächen des vor dem Auge des jeweiligen Brillenträgers angeordneten Brillenglases ist.

Dem obigen Beispiel folgend existieren bei fünf Brillenträgern fünf erste Sehstrahlen und auch fünf erste Durchstoßpunkte, wobei die Blickwinkel, d.h. die Kugelkoordinaten jedes ersten Sehstrahls in den individuellen Koordinatensystemen, jeweils identisch sind. Die Koordinaten der jeweiligen Durchstoßpunkte in den Koordinatensystemen der jeweiligen Brillengläser können sich voneinander unterscheiden. Beispielsweise werden die Koordinaten eines jeden Durchstoßpunktes in dem Koordinatensystem des zugehörigen Brillenglases in kartesischen Koordinaten angegeben. Die kartesischen Koordinaten der fünf beispielhaften Punkte sind vorzugsweise nicht identisch.

Der erste Sehstrahl hat eindeutige Koordinaten im Koordinatensystem des Kopfes des ersten Brillenträgers, d.h. der Blickwinkel in Kugelkoordinaten eines jeden Sehstrahls ist eindeutig in dem Koordinatensystem des ersten Brillenträgers bestimmbar. Ebenso hat der erste Sehstrahl eindeutige Koordinaten im Koordinatensystem des Kopfes des zweiten Brillenträgers, wobei die Koordinaten des ersten Sehstrahls im Koordinatensystem des Kopfes des ersten Benutzers identisch sind mit den Koordinaten des ersten Sehstrahls, im Koordinatensystem des Kopfes des zweiten Benutzers. Für den zweiten Brillenträger wird ein Durchstoßpunkt des ersten Sehstrahls bestimmt, wobei der erste Sehstrahl des zweiten Brillenträgers im Koordinatensystem des Kopfes des zweiten Brillenträgers identische Blickwinkel, d.h. identische Kugelkoordinaten im Koordinatensystem des Kopfes des zweiten Brillenträgers aufweist, wie der erste Sehstrahl des ersten Brillenträgers in dem Koordinatensystem des ersten Brillenträgers. Gleiches gilt für den dritten, den vierten und den fünften Brillenträger, wobei die Anzahl der Brillenträger nicht auf fünf beschränkt ist, sondern eine beliebige Anzahl von Brillenträgern sein kann.

Vorzugsweise ist die augenseitige und/oder die objektseitige Fläche jedes Brillenglases der Serie weiterhin derart ausgelegt, daß in Gebrauchsstellung der Brillengläser vor Augen jeweiliger Brillenträger Sollvorgaben an Durchstoßpunkten N-ter Sehstrahlen mit jeweiligen augenseitigen oder objektseitigen Flächen der Brillengläser im wesentlichen identisch sind; jeder N-te Sehstrahl ein vorbestimmter augenseitiger Sehstrahl ist, welcher einen Pupillenmittelpunkt und einen optischen Augendrehpunkt des jeweiligen Auges schneidet, alle N-ten Sehstrahlen einen vorbestimmten, identischen augenseitigen Blickwinkel aufweisen, und Blickwinkel aller N-ten Sehstrahlen von den Blickwinkeln der übrigen Sehstrahlen jeweils verschieden sind.

N ist hierbei eine ganze Zahl größer gleich 2. Somit sind die Blickwinkel aller N-ten Sehstrahlen untereinander verschieden, so daß es keine zwei Sehstrahlen i und j gibt, welche identische Blickwinkel aufweisen.

in anderen Worten sind die obigen Eigenschaften der Brillengläser der Serie von Brillengläsern nicht auf die jeweils ersten Sehstrahlen beschränkt. Vielmehr gelten die obigen Eigenschaften für eine beliebige Anzahl von Sehstrahlen, wobei die Anzahl N Sehstrahlen sein kann. Vorzugsweise gelten die Eigenschaften für N = 2, besonders bevorzugt N = 10, insbesondere N = 100 Sehstrahlen.

Beispielsweise können die obigen Eigenschaften für zwei Sehstrahlen pro Brillenträger, d.h. einen ersten und einen zweiten Sehstrahl pro Brillenträger gelten. Bei einer Vielzahl von Brillenträgern werden für jeden Brillenträger jeweils ein erster und ein zweiter Sehstrahl angegeben, wobei die Blickwinkel der ersten Sehstrahlen für jeden Brillenträger identisch. Die Blickwinkel der zweiten Sehstrahlen sind ebenfalls für jeden Brillenträger identisch. Die Blickwinkel der ersten Sehstrahlen und der zweiten Sehstrahlen unterscheiden sich jedoch, d.h. der erste Sehstrahl eines Brillenträgers unterscheidet sich von dem zweiten Sehstrahl desselben Brillenträgers. Ist N vorzugsweise gleich 100, so weisen der erste, der zweite, der dritte, ... und der einhundertste Sehstrahl jeweils verschiedene Blickwinkel auf, d.h. der erste, der zweite, der dritte, ... und der einhundertste Sehstrahl ein und desselben Brillenträgers sind nicht identisch. Bei einer Vielzahl von Brillenträgern weisen jeweils die ersten Sehstrahlen gleiche Blickwinkel auf, d.h. der erste Sehstrahl eines jeden Benutzers hat in dem vorzugsweise ortsfesten Koordinatensystem des Kopfes des jeweiligen Benutzers identische Blickwinkel, d.h. identische Kugelkoordinaten. Gleiches gilt für die zweiten Sehstrahlen, dritten Sehstrahlen, ... und die einhundertsten Sehstrahlen.

Vorzugsweise ist zumindest ein Sehstrahl derart angeordnet, daß der dem Sehstrahl zugeordnete Durchstoßpunkt abseits der Hauptlinie liegt. In anderen Worten existiert für jeden Brillenträger zumindest ein Sehstrahl, welcher die augenseitige und/oder die objektseitige Fläche des Brillenglases in Gebrauchsstellung vor dem Auge des Brillenträgers abseits der Hauptlinie schneidet. Die Hauptlinie fällt in Gebrauchsstellung vorzugsweise im wesentlichen mit der Hauptblicklinie bei Blicksenkung zusammen.

Beispielsweise liegen alle Durchstoßpunkten auiserhaib bzw. abseits der Hauptlinie, insbesondere liegen alle Durchstoßpunkte außerhalb bzw. abseits der Progressionszone und/oder außerhalb des Nahbereichs und/oder außerhalb des Fernbereichs des jeweiligen Brillenglases. In anderen Worten schneiden vorzugsweise alle vorbestimmten Sehstrahlen eines Brillenträgers, für welche obige Eigenschaften gelten, die augenseitige und/oder die objektseitige Fläche jedes vor dem Auge des Brillenträgers angeordneten Brillenglases abseits der Progressionszone und/oder des Nahbereichs und/oder des Fernbereichs.

Insbesondere gilt für alle oben genannten Sehstrahlen vorzugsweise, daß der Blickwinkel gegenüber der Nullblickrichtung größer als vorzugsweise etwa 10° ist. In anderen Worten gilt für die Kugelkoordinaten eines jeden Sehstrahls, daß die Kugelkoordinaten vorzugsweise jeweils größer als etwa 10° sind.

Insbesondere umfaßt die Serie von Brillengläsern sowohl Einstärkengläser als auch Mehrstärkengläser.

Weiterhin vorzugsweise weisen alle Brillengläser der Serie im wesentlichen gleiche Addition und/oder im wesentlichen gleiche sphärische Brechkraft auf.

Vorzugsweise umfaßt die Serie von Brillengläsern eine Vielzahl von Brillengläser für ein und denselben Brillenträger. Die Brillengläser weisen alle vorzugsweise verschiedene Konfigurationen der augenseitigen und/oder objektseitigen Flächen auf. Aufgrund der verschiedenen Flächenformen der augenseitigen und/oder objektseitigen Flächen sind die Brillengläser jeweils in verschiedenen Gebrauchsstellungen vor dem Auge des Brillenträgers anordenbar. In anderen Worten unterscheiden sich die den verschiedenen Brillengläsern entsprechenden Individualparameter.

Die Serie von Brillengläsern kann aber auch eine Vielzahl von Brillengläser für verschiedene Brillenträger umfassen, wobei die augenseitigen und/oder objektseitigen Flächen der Brillengläser jeweils ausgelegt sind identischen Verordnungen zu entsprechen. in anderen Worten weisen die Brillengläser identische sphärische Wirkungen, Zylinderwerte und Achslagen der Zylinder auf, welche im wesentlichen verordneten Werten entsprechen, wobei die verordneten Werte jeweils im wesentlichen identisch sind, d.h. die Brillenträger, welche die jeweiligen Brillengläser tragen weisen jeweils eine im wesentlichen gleiche Fehlsichtigkeit auf.

Besonders bevorzugt ist die augenseitige oder objektseitige Fläche jedes Brillenglases der Serie von der augenseitigen oder objektseitigen Fläche der jeweils weiteren Brillengläser der Serie verschieden.

In anderen Worten können die verschiedenen Brillengläser der Serie im wesentlichen eine gleiche Addition und/oder im wesentlichen eine gleiche sphärische Brechkraft aufweisen. Aufgrund unterschiedlicher Individualparameter, d.h. unterschiedlicher Anordnung eines jeden Brillenglases vor einem Auge, unterscheiden sich jedoch die optimierten Flächen der verschiedenen Brillengläser jeweils voneinander.

Vorzugsweise ist die augenseitige und/oder die objektseitige Fläche jedes Brillenglases der Serie derart ausgelegt,

daß in Gebrauchsstellung der Brillengläser vor Augen genau eines vorbestimmten Brillenträgers Sollvorgaben an Durchstoßpunkten erster Sehstrahlen mit jeweiligen augenseitigen oder objektseitigen Flächen der Brillengläser im wesentlichen identisch sind.

In anderen Worten betrifft die vorliegende Erfindung vorzugsweise eine Serie von Brillengläsern, wobei

jedes Brillenglas der Serie eine augenseitige Fläche und eine objektseitige Fläche umfaßt;

die augenseitige und/oder die objektseitigen Fläche jedes Brillenglases der Serie derart ausgelegt ist,

daß in Gebrauchsstellung der Brillengläser vor einem Auge (oder beiden Augen) genau eines vorbestimmten Brillenträgers Sollvorgaben an Durchstoßpunkten eines ersten Sehstrahls mit jeweiligen augenseitigen oder objektseitigen Flächen der Brillengläser im wesentlichen identisch sind;

der erste Sehstrahl ein vorbestimmter augenseitiger Strahl ist, welcher einem Pupillenmittelpunkt und einen optischen Augendrehpunkt des jeweiligen Auges schneidet, und

der erste Sehstrahl einen vorbestimmten augenseitigen Blickwinkel aufweist;

die Sollvorgaben für jeden Durchstoßpunkt

- eine maximal zulässige Differenz zwischen einem vorgegebenen Wert einer sphärischen Brechkraft und einem tatsächlichen Wert einer sphärischen Brechkraft in Gebrauchsstellung, und/oder
- eine maximal zulässige Differenz zwischen einem vorgegebenen Wert eines Astigmatismus und einem tatsächlichen Wert eines Astigmatismus in Gebrauchsstellung, und/oder
- eine maximal zulässige Differenz zwischen einem vorgegebenen Wert einer Zylinderachse und einem tatsächlichen Wert einer Zylinderachse in Gebrauchsstellung

des jeweiligen Brillenglases der Serie umfassen.

Besonders bevorzugt gilt obiges für eine Vielzahl von N Sehstrahlen, wobei N vorzugsweise zwei, weiterhin vorzugsweise fünf, besonders bevorzugt 100 Sehstrahlen sind.

Die vorliegende Erfindung betrifft weiterhin ein Verfahren zum Herstellen eines Brillenglases anhand eines vorfertigen Brillenglases mit folgenden Schritten:

- Vorgeben eines vorfertigen Brillenglases;
- Vorgeben eines ersten Durchstoßpunktes einer Flächen des vorfertigen Brillenglases in einem Koordinatensystem des vorfertigen Brillenglases;
- Bestimmen eines Blickwinkels eines ersten, augenseitigen Sehstrahls, welcher die Fläche des vorfertigen Brillenglases in Gebrauchsstellung vor einem Auge eines Brillenträgers in dem ersten Durchstoßpunkt durchstößt, wobei gilt:

$$(\varphi_1, \psi_1) = \mathbf{s}_{IP}(x_1, y_1);$$

- Vorgeben von Sollvorgaben $g(\varphi_1, \psi_1)$ des ersten Sehstrahls;
- Zuordnen der Sollvorgaben $g(\varphi_1, \psi_1)$ des ersten Sehstrahls als Sollvorgaben $f(x_1, y_1)$ des ersten Durchstoßpunktes $(x_1, y_1)$ anhand der Gleichung

$$f(x_1, y_1) = g(\mathbf{s}_{IP}(x_1, y_1))$$

und

- Berechnen des Brillenglases unter Berücksichtigung der Sollvorgaben $f(x_1, y_1)$ des ersten Durchstoßpunktes $(x_1, y_1)$ ausgehend von dem vorfertigen Brillenglas, wobei die Sollvorgaben des ersten Durchstoßpunktes
- eine maximal zulässige Differenz zwischen einem vorgegebenen Wert einer sphärischen Brechkraft von einem tatsächlichen Wert einer sphärischen Brechkraft in Gebrauchsstellung, und/oder
- eine maximal zulässige Differenz zwischen einem vorgegebenen Wert eines Astigmatismus und einem tatsächlichen Wert eines Astigmatismus in Gebrauchsstellung, und/oder
- eine maximal zulässige Differenz zwischen einem vorgegebenen Wert einer Zylinderachslage und einem tatsächlichen Wert einer Zylinderachslage in Gebrauchsstellung des Brillenglases umfassen, der erste Sehstrahl ($S_1$) ein Strahl ist, welcher zumindest einen Pupillenmittelpunkt und einen optischen Augendrehpunkt eines Auges schneidet und $\mathbf{s}_{IP}$ eine Koordinatentransformation ist, anhand welcher die Koordinaten $(x_1, y_1)$ des ersten Durchstoßpunktes im Koordinatensystem des vorfertigen Brillenglases in Blickwinkel $(\varphi_1, \psi_1)$ des ersten augenseitigen Sehstrahls unter Berücksichtigung von Individualparametern des vorfertigen Brillenglases in Gebrauchsstellung überführt werden.

Vorzugsweise ist das vorfertige Brillenglas kein tatsächliches gefertigtes Brillenglas, sondern lediglich ein Datensatz eines berechneten Brillenglases. Insbesondere entsprechen die Parameter einer Gebrauchsstellung vor dem Auge, welche zur Bestimmung bzw. Berechnung des vorfertigen Brillenglases und zur Bestimmung des Blickwinkels des ersten, augenseitigen Sehstrahls verwendet wurden, den Parametern der Gebrauchsstellung des fertigen Brillenglases vor dem Auge. In anderen Worten entsprechen die Individualparameter des fertigen Brillenglases den Individualparametern, welche zur Berechnung bzw. Bestimmung des vorfertigen Brillenglases verwendet wurden.

Das vorfertige Brillenglas kann beispielsweise ein in herkömmlicher Weise berechnetes bzw. bestimmtes progressives Brillenglas sein. Insbesondere kann das vorfertige Brillenglas in herkömmlicher Weise mit Sollvorgaben als Funktion kartesischer Koordinaten des vorfertigen Brillenglases bestimmt bzw. berechnet werden.

Vorzugsweise wird das Verfahren anhand von N verschiedenen Durchstoßpunkten durchgeführt, wobei an jedem Durchstoßpunkt genau ein Sehstrahl die Fläche des vorfertigen Brillenglases durchstößt und die jeweiligen Blickwinkel der N Sehstrahlen voneinander verschieden sind.

Wird das vorfertige Brillenglas in herkömmlicher Weise anhand von $N_0$ Stützstellen bzw. Berechnungspunkten berechnet, entspricht die Anzahl der Sehstrahlen bzw. der Durchstoßpunkte vorzugsweise der Anzahl der Stützstellen bzw. Berechnungspunkte, d.h. $N = N_0$. Die Stützstellen bzw. Berechnungspunkte sind vorzugsweise Punkte der augenseitigen und/oder objektseitigen Fläche des vorfertigen Brillenglases anhand derer die Form der entsprechenden Fläche berechnet wird, um beispielsweise eine vorgegebene Verordnung (innerhalb der Sollvorgaben) zu erreichen.

In anderen Worten kann das erfindungsgemäße Verfahren vorzugsweise mit einer Vielzahl von N Sehstrahlen verwendet werden, wobei jeweils der Durchstoßpunkt des ersten Sehstrahls, der Durchstoßpunkt des zweiten Sehstrahls, der Durchstoßpunkt des dritten Sehstrahls, ... und der Durchstoßpunkt des N-ten Sehstrahls vorgeben werden und die Blickwinkel der entsprechenden Sehstrahlen bestimmt werden. Hierbei werden die Blickwinkel in Kugelkoordinaten angegeben, wobei das entsprechende Koordinatensystem jeweils ein ortsfestes Koordinatensystem bezüglich des Kopfes des Brillenträgers bzw. einer Vielzahl von Brillenträgern ist.

Weiterhin vorzugsweise können anhand der Koordinatentransformation $\mathbf{S}_{IP}$ Koordinaten der N Durchstoßpunkte in jeweilige Koordinaten der entsprechenden N Sehstrahlen unter Berücksichtigung von Individualparametern des vorgefertigten Brillenglases überführt werden. Anders ausgedrückt können mittels der Koordinatentransformation $\mathbf{S_{IP}}$ die Koordinaten eines jeden Durchstoßpunktes im vorzugsweise kartesischen Koordinatensystem eines jeden Brillenglases in Blickwinkel, d.h. Kugelkoordinaten, in dem jeweiligen Koordinatensystem eines Kopfes eines Benutzers oder jeweils eines Kopfes einer Vielzahl von Benutzern, überführt werden.

Besonders bevorzugt wird das erfindungsgemäße Verfahren für ein jedes Brillenglas einer Serie von Brillengläsern wiederholt durchgeführt.

Vorzugsweise werden ein oder mehrere Durchstoßpunkte jeweils einer Fläche einer Vielzahl von vorfertigen Brillengläsern in jeweils dem Koordinatensystem der vorfertigen Brillengläser vorgegeben. Beispielsweise werden für die jeweilige Fläche eines jedes vorfertigen Brillenglases ein erster, ein zweiter, ein dritter, ... und ein einhundertster Durchstoßpunkt für die jeweilige Fläche der Brillengläser vorgegeben. Die Koordinaten des ersten, des zweiten, des dritten, ... und des einhundertsten Durchstoßpunktes werden jeweils im Koordinatensystem des jeweiligen Brillenglases angegeben. Die Koordinaten des ersten Durchstoßpunktes sind in dem jeweiligen Koordinatensystem des jeweiligen Brillenglases identisch. Ebenso sind die Koordinaten des zweiten Durchstoßpunktes im Koordinatensystem des jeweiligen Brillenglases vorzugsweise identisch. Gleiches gilt für die Koordinaten der dritten bis einhundertsten Durchstoßpunkte.

Weiterhin sind die Durchstoßpunkte nicht auf 100 Durchstoßpunkte beschränkt. Vielmehr ist es möglich, daß eine beliebige Anzahl von N Durchstoßpunkten vorgegeben werden kann.

Bei der Fläche des vorfertigen Brillenglases, dessen Durchstoßpunkte vorgegeben werden, kann es sich beispielsweise um eine objektseitige Fläche handeln. Es kann sich auch um eine augenseitige Fläche des vorfertigen Brillenglases handeln.

In einer weiteren bevorzugten Ausführungsvariante des Verfahrens der vorliegenden Erfindung wird in einem ersten Schritt

- zumindest ein Referenzdurchstoßpunkt $(x_R, y_R)$ einer Fläche eines Referenzbrillenglases in einem Koordinatensystem des Referenzbrillenglases bestimmt,
- jedem Referenzdurchstoßpunkt $(x_R, y_R)$ einer Sollvorgabe $f(x_R, y_R)$ zugeordnet,
- für jeden Referenzdurchstoßpunkt $(x_R, y_R)$ des Referenzbrillenglases in Gebrauchsstellung vor einem Auge ein Blickwinkel $(\varphi, \psi)$ eines augenseitigen Sehstrahls in dem Koordinatensystem des Auges bestimmt, welcher die Fläche des Referenzbrillenglases in dem jeweiligen Referenzdurchstoßpunkt $(x_R, y_R)$ durchstößt, wobei gilt:

$$(\varphi, \psi) = \mathbf{s_{IP}}(x_R, y_R),$$

- die Sollvorgabe eines jeden Referenzdurchstoßpunktes des Referenzbrillenglases der Sollvorgabe des zugehörigen Sehstrahls zugeordnet, wobei gilt:

$$g(\varphi, \psi) = f_R(\mathbf{x_{IP}}(\varphi, \psi))$$

und

$x_{IP}$ eine Koordinatentransformation ist, anhand welcher die Blickwinkel eines jeden Sehstrahls in Koordinaten eines entsprechenden Referenzdurchstoßpunktes im Koordinatensystem des entsprechenden Referenzbrillenglases unter Berücksichtigung von Individualparametern des entsprechenden Referenzbrillenglases in Gebrauchsstellung überführt werden.

Folglich wird vorzugsweise bevor ein Brillenglas oder eine Serie von Brillengläsern hergestellt wird, ein Referenzbrillenglas angegeben. Das Referenzbrillenglas hat vorzugsweise eine mittlere sphärische Wirkung und einen mittleren Astigmatismus mit einer mittleren Achslage, d.h. einen mittleren Zylinder mit einer mittleren Zylinderachslage. Ferner werden zur Darstellung des Referenzbrillenglases vorzugsweise mittlere Individualparameter verwendet. Ein solches Brillenglas kann beispielsweise anhand eines herkömmlichen Optimierungsverfahrens berechnet bzw. bestimmt und gegebenenfalls auch hergestellt werden. An einer Fläche, welche eine augenseitige oder eine objektseitige Fläche des Referenzbrillenglases sein kann, wird ein Referenzdurchstoßpunkt oder eine Vielzahl von Referenzdurchstoßpunkten bestimmt. Für jeden der Referenzdurchstoßpunkte ist die Sollvorgabe bekannt bzw. wird jedem der Referenzdurchstoßpunkte eine vorbestimmte Sollvorgabe zugeordnet. Weiterhin wird für jeden Referenzdurchstoßpunkt ein Sehstrahl bestimmt bzw. ermittelt, welcher in der Gebrauchsstellung des Brillenglases vor dem Auge eines beispielhaften Brillenträgers den entsprechenden Referenzdurchstoßpunkt durchstößt.

In dem Koordinatensystem des Brillenträgers, d.h. in dem bezüglich des Kopfes des Brillenträgers ortsfesten Koordinatensystem, werden die Blickwinkel der jeweiligen Sehstrahlen in Kugelkoordinaten bestimmt. Anschließend werden die Sollvorgaben der Referenzdurchstoßpunkte den jeweiligen Sehstrahlen zugeordnet, welche die entsprechenden Referenzdurchstoßpunkte durchstoßen. Wird beispielsweise lediglich ein Referenzdurchstoßpunkt gewählt, entspricht die Sollvorgabe des Sehstrahls, welcher den Referenzdurchstoßpunkt in Gebrauchsstellung des Brillenglases durchstößt, der Sollvorgabe des Referenzdurchstoßpunktes. Werden beispielsweise ein erster und ein zweiter Referenzdurchstoßpunkt vorgegeben, wird die Sollvorgabe des ersten Durchstoßpunktes dem ersten Sehstrahl zugeordnet, welcher den ersten Durchstoßpunkt durchstößt. Entsprechend wird die Sollvorgabe des zweiten Durchstoßpunktes dem zweiten Sehstrahl zugeordnet, wobei der zweite Sehstrahl an dem zweiten Durchstoßpunkt die Fläche des Referenzbrillenglases durchstößt. Bei einer Vielzahl von Referenzdurchstoßpunkten gilt entsprechendes.

Die Sollvorgaben der entsprechenden Sehstrahlen werden anschließend in dem erfindungsgemäßen Verfahren verwendet, um ein oder mehrere Brillengläser herzustellen, wobei sich die Brillengläser anhand der verschiedenen Individualparameter unterscheiden können. Folglich entspricht die Anzahl der Sehstrahlen, welche in einer bevorzugten Ausführungsvariante des erfindungsgemäßen Verfahrens verwendet werden, vorzugsweise der Anzahl von Punkten, anhand welcher das Referenzbrillenglas berechnet bzw. bestimmt wird, d.h. die Anzahl der Sehstrahlen entspricht vorzugsweise der Anzahl der vorgegebenen Sollvorgaben.

Weiterhin vorzugsweise wird das Verfahren nach dem ersten Schritt für zumindest ein von dem Referenzbrillenglas verschiedenes Brillenglas durchgeführt.

Besonders bevorzugt wird das Verfahren nach dem ersten Schritt für ein jedes Brillenglas einer Serie von Brillengläsern wiederholt durchgeführt.

In anderen Worten werden die Sollvorgaben als Funktion der kartesischen Koordinaten der Referenzdurchstoßpunkte des Referenzbrillenglases angegeben und den den Referenzdurchstoßpunkten zugehörigen Sehstrahlen die Sollvorgaben der entsprechenden Referenzdurchstoßpunkte zugeordnet. Die Sollvorgaben können somit als Funktionen der Blickwinkel der jeweiligen Sehstrahlen dargestellt werden. Für eine beliebige Anzahl von Brillengläsern, welche anschließend hergestellt werden sollen, werden die Sollvorgaben als Funktion der Blickwinkel der Sehstrahlen verwendet, wobei für jeden Durchstoßpunkt eines Brillenglases der entsprechende Sehstrahls ermittelt wird und insbesondere die Blickwinkel des entsprechenden Sehstrahls ermittelt werden. Anhand der Verteilung der Sollvorgaben als Funktion der Sehstrahlen bzw. der Blickwinkel der Sehstrahlen werden den Durchstoßpunkten der vorfertigen Brillengläser Sollvorgaben zugeordnet, welche mittels dieser Sollvorgaben kann das vorfertige Brillenglas fertig berechnet bzw. bestimmt werden und hergestellt werden.

In anderen Worten weisen alle Brillengläser einer nach dem obigen Verfahren hergestellten Serie von Brillengläsern in Gebrauchsstellung für den jeweiligen Brillenträger ein in einer vorbestimmten Blickrichtung gleiches optisches Sehempfinden auf, wobei die optischen Eigenschaften der jeweiligen Brillengläser als Funktion der kartesischen Koordinaten der jeweiligen Brillengläser durchaus verschieden sein können.

Weiterhin ist es nicht notwendig, daß eine Zuordnung von Sollvorgaben für alle möglichen Sehstrahlen bzw. verschiedenen Blickwinkel von Sehstrahlen durchgeführt wird. Vielmehr reicht es aus, einer bestimmten Menge von Sehstrahlen Sollvorgaben zuzuordnen. Beispielsweise kann die Anzahl der Sehstrahlen von einer Größe der augenseitigen und/oder objektseitigen Fläche abhängen. Vorzugsweise können die Sehstrahlen derart ausgewählt bzw. angeordnet sein, daß der Abstand zweier benachbarter Sehstrahlen in Kugelkoordinaten vorzugsweise etwa 2°, besonders bevorzugt etwa 1° beträgt. Gegebenenfalls können Sollvorgaben für Sehstrahlen, welche nicht bestimmt sind, interpoliert werden. Werden beispielsweise Durchstoßpunkte vorgegeben, wobei den Durchstoßpunkten entsprechender Sehstrahlen keine Sollvorgaben zugeordnet sind, können die Sollvorgaben solcher Sehstrahlen anhand von Sollvorgaben benachbarter Sehstrahlen interpoliert werden.

Ein weiterer Aspekt der vorliegenden Erfindung ist die Verwendung zumindest eines Brillenglases einer Serie von Brillengläsern zur Korrektur von optischen Fehlsichtigkeiten zumindest eines Brillenträgers, wobei das zumindest eine Brillenglas der Serie eine augenseitige Fläche und eine objektseitige Fläche umfaßt;

die augenseitige und/oder die objektseitige Fläche des zumindest einen Brillenglases der Serie derart ausgelegt ist,

daß in Gebrauchsstellung des zumindest einen Brillenglases vor Augen jeweiliger Brillenträger Sollvorgaben an Durchstoßpunkten erster Sehstrahlen mit jeweiligen augenseitigen oder objektseitigen Flächen des zumindest einen Brillenglases im wesentlichen identisch sind; jeder erste Sehstrahl ein vorbestimmter augenseitiger Sehstrahl ist, welcher einem Pupillenmittelpunkt und einen optischen Augendrehpunkt des jeweiligen Auges schneidet, und

alle ersten Sehstrahlen einen vorbestimmten, identischen augenseitigen Blickwinkel aufweisen; die Sollvorgaben für jeden Durchstoßpunkt

- eine maximal zulässige Differenz zwischen einem vorgegebenen Wert einer sphärischen Brechkraft und einem tatsächlichen Wert einer sphärischen Brechkraft in Gebrauchsstellung, und/oder

- eine maximal zulässige Differenz zwischen einem vorgegebenen Wert eines Astigmatismus und einem tatsächlichen Wert eines Astigmatismus in Gebrauchsstellung, und/oder

- eine maximal zulässige Differenz zwischen einem vorgegebenen Wert einer Zylinderachslage und einem tatsächlichen Wert einer Zylinderachslage in Gebrauchsstellung

des zumindest einen Brillenglases der Serie umfassen.

Weiterhin gelten die obigen Ausführungen zu der Serie von Brillengläsern in analoger Weise auch für die Verwendung des zumindest einen Brillenglases der Serie von Brillengläsern.

Nachfolgend wird die Erfindung beispielhaft an Hand begleitender Zeichnungen bevorzugter Ausführungsformen beschrieben. Es zeigt

Figur 1: eine perspektivische Ansicht einer Anordnung eines Brillenglases in Gebrauchsstellung vor einem Auge eines Brillenträgers;

Figur 2: eine Schnittansicht der Figur 1;

Figur 3: eine Draufsicht der Figur 1;

Figur 4: eine Draufsicht gemäß Figur 3.

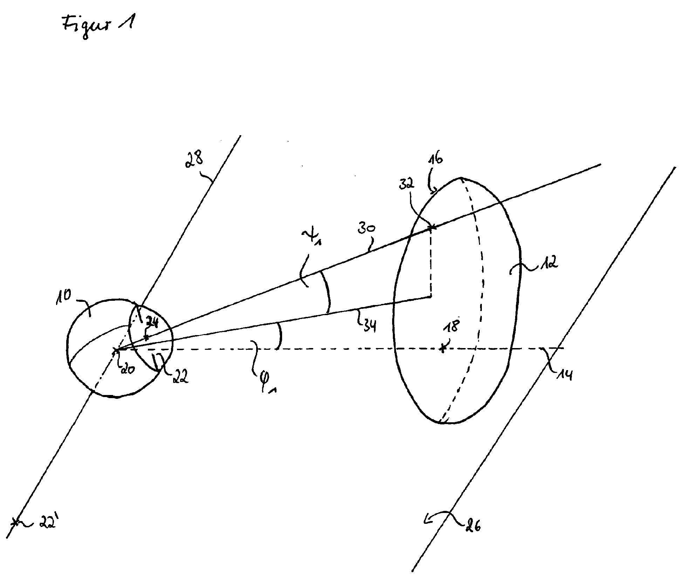

**Figur 1** zeigt eine perspektivische Ansicht eines Systems eines Auges 10 und eines ersten Brillenglases 12 eines Brillenträgers. Das erste Brillenglas 12 ist derart vor dem Auge 10 angeordnet, daß ein Sehstrahl in Nullblickrichtung 14 des Auges 10 eine augenseitige Fläche 16 des ersten Brillenglases 12 in einem Nulldurchblickpunkt 18 des ersten Brillenglases 12 schneidet. Wenn das Auge 10 derart ausgerichtet ist, daß der Brillenträger in Nullblickrichtung blickt, schneidet der Sehstrahl in Nullblickrichtung 14 außerdem einen optischen Augendrehpunkt 20 und eine Pupille 22 in dem Mittelpunkt 24. Weiterhin zeigt Figur 1 eine Grundebene 26, wobei die Grundebene 26 durch zwei sich schneidende Geraden 28, 14 aufgespannt wird. Die Grundebene 26 wird durch die Gerade 28 und den Sehstrahl in Nullblickrichtung 14 aufgespannt. Die Gerade 28 schneidet den optischen Augendrehpunkt 20 des Auges 10 und den optischen Augendrehpunkt 20' eines zweiten Auges (nicht gezeigt) des Brillenträgers. Blickt der Brillenträger in Nullblickrichtung, liegen auch der Mittelpunkt 24 der Pupille 22 des einen Auges 10 und ein Mittelpunkt der Pupille (nicht gezeigt) des zweiten Auges (nicht gezeigt) des Brillenträgers in der Grundebene 26. Insbesondere ist in Figur 1 das Auge 10 des Brillenträgers in einer Anordnung gezeigt, in der, ausgehend von der Anordnung des Auges 10 in Nullblickrichtung, das Auge 10 um den optischen Augendrehpunkt 20 gedreht ist. Der Brillenträger blickt daher nicht in Nullblickrichtung, sondern in eine von der Nullblickrichtung verschiedene Richtung. Die Blickrichtung, in welche der Brillenträger blickt, ist durch einen ersten Sehstrahl 30 dargestellt. Der erste Sehstrahl 30 schneidet den optischen Augendrehpunkt 20 und den Mittelpunkt 24 der Pupille 22 des Auges 10. Ferner durchstößt der erste Sehstrahl 30 die augenseitige Fläche 16 in einem ersten Durchstoßpunkt 32. Weiterhin ist ein Blickwinkel ($\varphi_1$, $\psi_1$) des ersten Sehstrahls 30 dargestellt. Insbesondere ist der Blickwinkel des ersten Sehstrahls 30 in Kugelkoordinaten angegeben, wobei sich die Kugelkoordinaten auf ein ortsfestes Koordinatensystem bezüglich eines Kopfes (nicht gezeigt) des Brillenträgers beziehen. Insbesondere wird das Koordinatensystem durch die Grundlinie 26 und den Sehstrahl in Nullblickrichtung 14 bestimmt.

Der in Figur 1 gezeigte erste Sehstrahl 30 schneidet die Grundebene 26 in dem optischen Augendrehpunkt 20. Ferner ist in Figur 1 eine Projektion 34 des ersten Sehstrahls auf die Grundebene 26 dargestellt. In Kugelkoordinaten ergibt sich ein Azimutwinkel $\varphi_1$ als der Winkel zwischen der Projektion 34 des ersten Sehstrahls 30 auf die Ebene 26 und dem Sehstrahl in Nullblickrichtung 14. Ein Inklinationswinkel $\psi_1$ repräsentiert den Schnittwinkel des ersten Sehstrahls 30 mit der Grundebene 26, d.h. der Inklinationswinkel $\psi_1$ ist ein Winkel zwischen dem ersten Sehstrahl 30 und der Projektion 34 des ersten Sehstrahls 30 auf die Grundebene 26. Blickt der Brillenträger in Nullblickrichtung, so sind sowohl der Azimutwinkel $\varphi_1$ als auch der Inklinationswinkel $\psi_1$ gleich 0°. Der erste Sehstrahl 30 ist daher eindeutig in Kugelkoordinaten bestimmt, wobei der Blickwinkel des ersten Sehstrahls 30 durch den Azimutwinkel $\varphi_1$ und den Inklinationswinkel $\psi_1$ definiert ist. Bei einer Änderung der Blickrichtung des Auges 10 ändert sich der Blickwinkel, d.h. der Azimutwinkel $\varphi$ und/oder der Inklinationswinkel $\psi$.

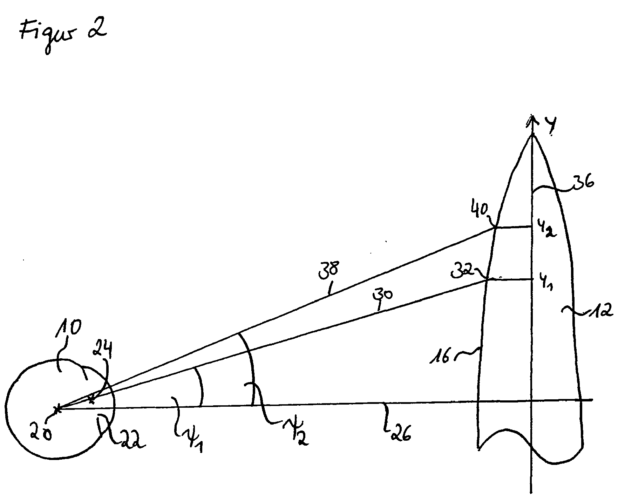

Zwei verschiedene Sehstrahlen, beispielsweise der erste Sehstrahl 30 und ein zweiter Sehstrahl (gezeigt in Figuren 2 bis 4) unterscheiden sich in zumindest einem der beiden Winkel der Kugelkoordinaten, d.h. sie unterscheiden sich in dem Azimutwinkel $\varphi$ und/oder dem Inklinationswinkel $\psi$. Folglich kann für jeden beliebigen Brillenträger jeder Sehstrahl eindeutig in einem ortsfesten Koordinatensystem des Kopfes des Brillenträgers in Kugelkoordinaten dargestellt werden.

**Figur 2** zeigt eine vertikale Schnittansicht von Figur 1, d.h. eine Schnittansicht entlang des Sehstrahls in Nullblickrichtung 14 senkrecht zu der Grundebene 26. Die Grundebene 26 steht senkrecht zu der Zeichenebene der Figur 2. Folglich ist der Azimutwinkel $\varphi_1$ in Figur 2 nicht sichtbar, sondern lediglich der Inklinationswinkel $\psi_1$ des ersten Sehstrahls 30. Der erste Sehstrahl schneidet die augenseitige Fläche 16 des ersten Brillenglases 12 in dem ersten Durchstoßpunkt 32. Ferner ist in Figur 2 eine y-Achse des ersten Brillenglases 12 gezeigt. Eine Projektion des ersten Durchstoßpunktes 32 auf die y-Achse ergibt eine y-Koordinate $y_1$ des ersten Durchstoßpunktes 32. In Figur 2 ist ferner ein zweiter Sehstrahl 38 dargestellt. Der zweite Sehstrahl 38 entspricht einer veränderten Blickrichtung des Auges 10. Eine veränderte Blickrichtung des Auges 10 wird dadurch erreicht, daß das Auge 10 um den optischen Augendrehpunkt 20 gedreht wird, d.h. die Lage des Mittelpunkts 24 der Pupille 22 in dem ortsfesten Koordinatensystem des Kopfes des Brillenträgers verändert wird, wobei der optische Augendrehpunkt 20 bei einer Änderung der Blickrichtung unverändert bleibt.

Insbesondere schneidet der zweite Sehstrahl 38 den optischen Augendrehpunkt 20 und den Mittelpunkt 24 der Pupille 22 des Auges 10. Wie aus Figur 2 ersichtlich ist, weist der zweite Sehstrahl 38 einen Inklinationswinkel $\psi_2$ auf, welcher von dem Inklinationswinkel $\psi_1$ des ersten Sehstrahls 32 verschieden ist. Folglich schneidet der zweite Sehstrahl 38 die augenseitige Fläche 16 des ersten Brillenglases 12 in einem zweiten Durchstoßpunkt 40. Eine Projektion des zweiten Durchstoßpunktes 40 auf die y-Achse ergibt eine y-Koordinate

$y_2$ des zweiten Durchstoßpunktes 40.

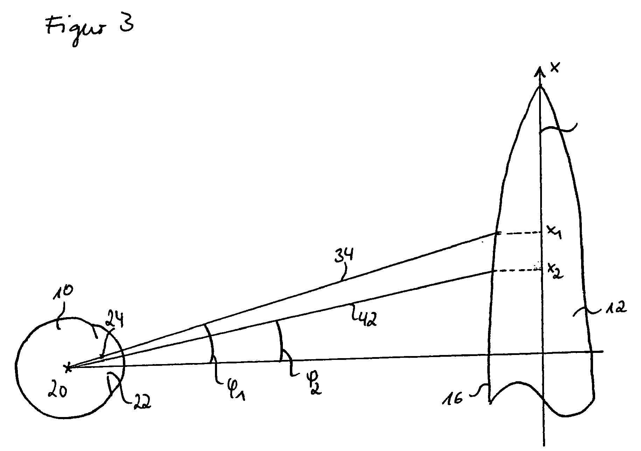

**Figur 3** zeigt eine Schnittansicht der Figur 1 entlang der Grundebene 26. In Figur 3 ist die Projektion 34 des ersten Sehstrahls 30 auf die Grundebene 26 dargestellt. Analog ist in Figur 3 eine Projektion 42 des zweiten Sehstrahls 38 auf die Grundebene 26 dargestellt. Ferner sind in Figur 3 eine Projektion des ersten Durchstoßpunktes 32 auf eine x-Achse und eine Projektion des zweiten Durchstoßpunktes 40 auf die x-Achse dargestellt. Die Projektion des ersten Durchstoßpunktes 32 auf die x-Achse ergibt eine x-Koordinate $x_1$ des ersten Durchstoßpunktes 32. Analog ergibt die Projektion des zweiten Durchstoßpunktes 40 auf die x-Achse eine x-Koordinate $x_2$ des zweiten Durchstoßpunktes 40.

In Figur 3 ist lediglich der Azimutwinkel $\varphi_1$ des ersten Sehstrahls 30 und ein Azimutwinkel $\varphi_2$ des zweiten Sehstrahls 42 dargestellt. Die Inklinationswinkel $\psi_1$ und $\psi_2$ sind aufgrund der gewählten Schnittebene in Figur 3 nicht ersichtlich.

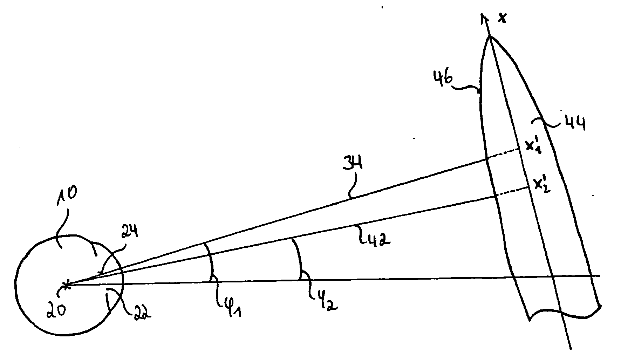

**Figur 4** zeigt eine Schnittansicht gemäß Figur 3, wobei jedoch anstelle des ersten Brillenglases 12 ein zweites Brillenglas 44 angeordnet ist und das zweite Brillenglas 44 eine von der in Figuren 1 bis 3 gezeigten Anordnung verschiedene Anordnungen aufweist. Insbesondere ist ein Fassungsscheibenwinkel, unter welchem das zweite Brillenglas 44 gemäß Figur 4 angeordnet ist, verschieden von dem Fassungsscheibenwinkel, unter welchem das erste Brillenglas 12 gemäß Figur 3 angeordnet ist. Bei identischem ersten Sehstrahl 30 und zweitem Sehstrahl 38 verändert sich daher die x-Koordinaten des ersten Durchstoßpunktes 32 und des zweiten Durchstoßpunktes 40. Der erste Durchstoßpunkt 32 hat eine x-Koordinate $x_1'$. Der zweite Durchstoßpunkt 40 hat eine x-Koordinate $x_2$.

Ist das erste Brillenglas 12 vor dem Auge 10 des Brillenträgers angeordnet, weist das erste Brillenglas 12 an dem ersten Durchstoßpunkt 32 vorbestimmte Sollvorgaben auf. Beispielsweise beträgt die vorgegebene sphärische Wirkung an dem ersten Durchstoßpunkt 32 1 dpt. Die tatsächliche sphärische Wirkung an dem ersten Durchstoßpunkt 32 kann jedoch von dem vorgegebenen Wert abweichen. Eine maximale Abweichung der vorgegebenen sphärischen Wirkung von der tatsächlichen sphärischen Wirkung wird als Sollvorgabe bezeichnet. Beispielsweise kann die Sollvorgabe an dem ersten Durchstoßpunkt 32 0,5 dpt betragen. Der tatsächliche vorliegend Wert der sphärischen Wirkung kann folglich beispielsweise 1,5 dpt betragen. In Koordinaten des Koordinatensystems des ersten Brillenglases 12 angegeben, beträgt bei dem ersten Durchstoßpunkt 32 mit den Koordinaten $(x_1, y_1)$ die tatsächliche sphärische Wirkung 1,5 dpt.

Analog kann bei dem zweiten Durchstoßpunkt 40 des zweiten Sehstrahls 38 eine spezifische Verordnung vorgegeben werden, beispielsweise 1,5 dpt, und entsprechend für den zweiten Sehstrahl 38 auch eine Sollvorgabe, beispielsweise 1,0 dpt angegeben werden. Der tatsächliche Wert der sphärischen Wirkung an dem zweiten Durchstoßpunkt 40 kann folglich beispielsweise 2,5 dpt betragen.

Wird anstelle des ersten Brillenglases 12 das zweite Brillenglas 44 vor dem Auge 10 des Brillenträgers in Gebrauchsstellung angeordnet, durchstoßen sowohl der erste Sehstrahl 30 als auch der zweite Sehstrahl 38 eine augenseitige Fläche 46 des zweiten Brillenglases 44. Folglich ergeben sich wieder ein erster Durchstoßpunkt 32 und ein zweiter Durchstoßpunkt 40, wobei jedoch sowohl der erste Durchstoßpunkt 32 als auch der zweite Durchstoßpunkt 40 im Koordinatensystem des zweiten Brillenglases 44 Koordinaten aufweisen, welche sich von den Koordinaten des ersten Durchstoßpunktes 32 und des zweiten Durchstoßpunktes 40 in dem Koordinatensystem des ersten Brillenglases 12 unterscheiden. Die Koordinaten des ersten Durchstoßpunktes 32 im Koordinatensystem des zweiten Brillenglases 44 betragen beispielsweise $(x_1', y_1')$. Die Koordinaten des zweiten Durchstoßpunktes 40 in dem Koordinatensystem des zweiten Brillenglases 44 betragen beispielsweise $(x_2', y_2')$. Die Sollvorgabe für den ersten Durchstoßpunkt ist jedoch unabhängig von dem Brillenglas, d.h. sie beträgt auch an dem ersten Durchstoßpunkt 32 des ersten Sehstrahls 30 durch die augenseitige Fläche 46 des zweiten Brillenglases 44 beispielsweise 0,5 dpt. Ebenso beträgt die Sollvorgabe des zweiten Durchstoßpunktes 40 des zweiten Sehstrahls 38 durch die augenseitige Fläche 46 des zweiten Brillenglases 44 beispielsweise 1 dpt. Wird wiederum der tatsächliche Wert der sphärischen Wirkung an dem ersten Durchstoßpunkt 32 bzw. an dem zweiten Durchstoßpunkt 40 bestimmt, welcher sich innerhalb eines Wertebereichs aus der verordneten sphärischen Wirkung an dem jeweiligen Durchstoßpunkt und der Sollvorgabe befindet. Die verordnete sphärische Wirkung an dem ersten Durchstoßpunkt 32 des ersten Sehstrahls 30 durch die augenseitige Fläche 46 des zweiten Brillenglases 44 kann beispielsweise 1,5 dpt betragen. Die tatsächliche sphärische Wirkung an dem zweiten Durchstoßpunkt 40 des zweiten Sehstrahls 38 durch die augenseitige Fläche 46 des zweiten Brillenglases 44 beträgt beispielsweise 2,5 dpt (welche innerhalb der Sollvorgabe von 1 dpt liegt). Folglich ergibt sich für den Brillenträger, unabhängig davon, ob das erste Brillenglas 12 oder das zweite Brillenglas 44 vor dem Auge 10 angeordnet ist, das gleiche subjektive Sehempfinden.

Die obige Beschreibung wurde beispielhaft für zwei Brillengläser 12, 44 und zwei Sehstrahlen 30, 38 beschrieben. Das gleiche gilt jedoch auch für eine Vielzahl von Sehstrahlen, beispielsweise etwa 100 Sehstrahlen. Ebenso gelten die obigen Ausführungen in analoger Weise für eine Vielzahl von Brillengläsern. Ferner kann die Anzahl der Sehstrahlen auch mit wechselndem Brillenglas variieren. Beispielsweise können die Sehstrahlen derart angeordnet sein, daß sich Azimutwinkel und/oder Inklinationswinkel benachbarter Sehstrahlen eines Auges um einen vorbestimmten Winkel, vorzugsweise etwa 5°, besonders bevorzugt etwa 2°, insbesondere etwa 1 ° voneinander unterscheiden. Weisen zwei verschiedene Brillengläser 12, 44 beispielsweise verschiedene Größen der augenseitigen Flächen auf durchstoßen beispielsweise auch eine unterschiedliche Anzahl von Sehstrahlen die jeweiligen Flächen.

Weiterhin ist es auch möglich, daß die obige Beschreibung für eine Vielzahl von Brillenträgern zutrifft. In anderen Worten sind die Sollvorgaben, d.h. die Abweichung der tatsächlich vorliegenden optischen Eigenschaften von den verordneten Werten, an den Durchstoßpunkten von Sehstrahlen mit im wesentlichen gleichen Blickwinkeln durch augenseitige Flächen von Brillengläsern bei jedem Benutzer identisch. Optische Eigenschaften sind beispielsweise sphärische Wirkung, Zylinder und Achslage des Zylinders. Bei einer Vielzahl von Brillenträgern kann beispielsweise ein erster Sehstrahl vorliegen, wobei für jeden Brillenträger der erste Sehstrahl den Azimutwinkel $\varphi_1$ und den Inklinationswinkel $\psi_1$ aufweist. Hierbei ist für jeden Brillenträger der Wert des Azimutwinkeis $\varphi_1$ identisch mit dem Wert des Azimutwinkels $\varphi_1$ der weiteren Brillenträger. Analog ist auch der Wert des Inklinationswinkels $\psi_1$ für jeden Brillenträger identisch mit dem Wert des Inklinationswinkels $\psi_1$ der weiteren Brillenträger. Für jeden ersten Sehstrahl ist daher die maximale Abweichung von dem verordneten Wert einer optischen Größe und dem tatsächlichen Wert dieser optischen Größe an dem entsprechenden Durchstoßpunkt gleich. Das subjektive Sehempfinden entspricht genau dieser Abweichung. Ist der tatsächliche Wert der optischen Größe gleich dem verordneten Wert der optischen Größe, ist der Sehfehler des Brillenträgers genau kompensiert, d.h. der Brillenträger hat ein optisches Sehempfinden, als ob er keine optische Fehlsichtigkeit hätte. Weicht der tatsächliche Wert jedoch von dem verordnetem Wert ab, wird der Sehfehler nicht vollständig kompensiert, der Brillenträger empfindet ein subjektives negatives Sehempfinden. Die Abweichung des tatsächlichen Wertes von dem verordneten Wert wird durch die Sollvorgabe beschrieben. Ist bei einem vorbestimmten Sehstrahl, d.h. bei einem bestimmten Blickwinkel, die Sollvorgabe für alle Brillenträger und alle möglichen, vor dem Auge des jeweiligen Brillenträgers angeordneten Brillengläser identisch, empfinden alle Brillenträger bei allen möglichen Brillengläsern bei diesem bestimmten Blickwinkel das gleiche subjektive Sehempfinden. Gilt dies für eine Vielzahl von bestimmten Blickwinkeln, d.h. für eine Vielzahl von vorbestimmten Sehstrahlen, so empfinden die Vielzahl der Brillenträger für jeden dieser Blickwinkel, d.h. für jeden dieser Sehstrahlen das gleiche subjektive Sehempfinden, egal welches der (dem jeweiligen Brillenträger zugeordneten) Brillengläser vor dem jeweiligen Auge des Brillenträgers angeordnet ist.

Die obigen Ausführungen wurden beispielhaft anhand von Werten für die sphärische Wirkung an den jeweiligen Durchstoßpunkten beschrieben. Erfindungsgemäß gilt dies aber auch für weitere optischen Größen, beispielsweise Zylinder, d.h. Wert des Astigmatismus, und/oder Zylinderachse, d.h. Achslage des Astigmatismus, an den entsprechenden Durchstoßpunkten.

## Bezugszeichenliste

| 10 | Auge |
| 12 | erstes Brillenglas |
| 14 | Sehstrahl in Nullblickrichtung |
| 16 | augenseitige Fläche |
| 18 | Nulldurchblickpunkt |
| 20 | optischer Augendrehpunkt |
| 20' | optischer Augendrehpunkt |
| 22 | Pupille |
| 24 | Mittelpunkt |
| 26 | Grundebene |
| 28 | Gerade |
| 30 | erster Sehstrahl |
| 32 | erster Durchstoßpunkt |
| 34 | Projektion |
| 36 | y-Achse |
| 38 | zweiter Sehstrahl |
| 40 | zweiter Durchstoßpunkt |
| 42 | Projektion |
| 44 | zweites Brillenglas |
| 46 | augenseitige Fläche |

## Patentansprüche

1. Serie von Brillengläsern (12, 44), wobei
   jedes Brillenglas (12, 44) der Serie eine augenseitige Fläche (16, 46) und eine objektseitige Fläche umfaßt;
   die augenseitige (16, 46) und/oder die objektseitige Fläche jedes Brillenglases (12, 44) der Serie derart ausgelegt ist,
   daß in einer standardisierten Gebrauchsstellung der Brillengläser (12, 44) vor Augen (10) jeweiliger Brillenträger Sollvorgaben $(f(x_1, y_1), f(x'_1, y'_1), g(\varphi_1, \psi_1))$ an Durchstoßpunkten (32) erster Sehstrahlen (30) mit jeweiligen augenseitigen (16, 46) oder objektseitigen Flächen der Brillengläser (12, 44) für jedes Brillenglas (12, 44) der Serie im wesentlichen identisch sind;
   jeder erste Sehstrahl (30) ein vorbestimmter, augenseitiger Strahl ist, welcher einen Pupillenmittelpunkt (24) und einen optischen Augendrehpunkt (20) des jeweiligen Auges (10) schneidet, und
   alle ersten Sehstrahlen (30) einen vorbestimmten, identischen augenseitigen Blickwinkel $(\varphi_1, \psi_1)$ aufweisen;
   die Sollvorgaben $(f(x_1, y_1), f(x'_1, y'_1), g(\varphi_1, \psi_1))$ für jeden Durchstoßpunkt (32)

   - eine maximal zulässige Differenz zwischen einem vorgegebenen Wert einer sphärischen Brechkraft und einem tatsächlichen Wert einer sphärischen Brechkraft in derstandardisierten Gebrauchsstellung, und/oder

- eine maximal zulässige Differenz zwischen einem vorgegebenen Wert eines Astigmatismus und einem tatsächlichen Wert eines Astigmatismus in derstandardisierten Gebrauchsstellung, und/oder

- eine maximal zulässige Differenz zwischen einem vorgegebenen Wert einer Zylinderachslage und einem tatsächlichen Wert einer Zylinderachslage in derstandardisierten Gebrauchsstellung

des jeweiligen Brillenglases (12, 44) der Serie umfassen.

2. Serie von Brillengläsern (12, 44) nach Anspruch 1, wobei

die augenseitige (16, 46) und/oder die objektseitige Fläche jedes Brillenglases (12, 44) der Serie weiterhin derart ausgelegt ist,

daß in Gebrauchsstellung der Brillengläser (12, 44) vor Augen (10) jeweiliger Brillenträger Sollvorgaben an Durchstoßpunkten (40) N-ter Sehstrahlen (38) mit jeweiligen augenseitigen (16, 46) oder objektseitigen Flächen der Brillengläser (12, 44) im wesentlichen identisch sind;

jeder N-te Sehstrahl (38) ein vorbestimmter, augenseitiger Strahl ist, welcher einen Pupillenmittelpunkt (24) und einen optischen Augendrehpunkte (20) des jeweiligen Auges (12) schneidet,

alle N-ten Sehstrahlen (38) einen vorbestimmten, identischen augenseitigen Blickwinkel ($\varphi_2$, $\psi_2$) aufweisen, und

Blickwinkel ($\varphi_2$, $\psi_2$) aller N-ten Sehstrahlen (38) von den Blickwinkeln ($\varphi_1$, $\psi_1$) aller übrigen Sehstrahlen (30) jeweils verschieden sind.

3. Serie von Brillengläsern (12, 44) nach Anspruch 2, wobei N = 2, vorzugsweise N = 5, besonders bevorzugt N = 100 gilt.

4. Serie von Brillengläsern (12, 44) nach einem der vorangegangenen Ansprüche 1 bis 3, wobei alle Brillengläser (12, 44) der Serie eine im wesentlichen gleiche Addition aufweisen.

5. Serie von Brillengläsern (12, 44) nach einem der vorangegangenen Ansprüche, wobei die augenseitige (16, 46) oder objektseitige Fläche jedes Brillenglases (12, 44) der Serie von der augenseitigen (16, 46) oder objektseitigen Fläche der jeweils weiteren Brillengläser (12, 44) der Serie verschieden ist.

6. Serie von Brillengläsern (12, 44) nach einem der vorangegangenen Ansprüche, wobei die augenseitige (16, 46) und/oder die objektseitige Fläche jedes Brillenglases (12, 44) der Serie derart ausgelegt ist,

daß in Gebrauchsstellung der Brillengläser (12, 44) vor Augen (10) genau eines vorbestimmten Brillenträgers Sollvorgaben (f($x_1$, $y_1$), f($x'_1$, $y'_1$), g($\varphi_1$, $\psi_1$)) an Durchstoßpunkten (32) erster Sehstrahlen (30) mit jeweiligen augenseitigen (16, 46) oder objektseitigen Flächen der Brillengläser (12, 44) im wesentlichen identisch sind.

7. Verfahren zum Herstellen eines Brillenglases (12, 44) anhand eines vorfertigen Brillenglases mit folgenden Schritten:

- Vorgeben eines vorfertigen Brillenglases und einer Gebrauchsstellung des vorfertigen Brillenglases;
- Vorgeben eines ersten Durchstoßpunktes (32, ($x_1$, $y_1$), ($x'_1$, $y'_1$)) einer Fläche des vorfertigen Brillenglases in einem Koordinatensystem des vorfertigen Brillenglases;
- Bestimmen eines Blickwinkels ($\varphi_1$, $\psi_1$) eines ersten, augenseitigen Sehstrahls (30), welcher die Fläche des vorfertigen Brillenglases in Gebrauchsstellung vor einem Auge (10) eines Brillenträgers in dem ersten Durchstoßpunkt (32, ($x_1$, $y_1$), ($x'_1$, $y'_1$)) durchstößt, wobei gilt:

$$(\varphi_1, \psi_1) = \mathbf{s}_{IP}(x_1, y_1);$$

- Vorgeben von Sollvorgaben ($\varphi_1$, $\psi_1$)) des ersten Sehstrahls (30);
- Zuordnen der Sollvorgaben (g($\varphi_1$, $\psi_1$)) des ersten Sehstrahls (30) als Sollvorgaben (f($x_1$, $y_1$), f($x'_1$, $y'_1$)) des ersten Durchstoßpunktes (32, ($x_1$, $y_1$), ($x'_1$, $y'_1$)) anhand der Gleichung

$$f(x_1, y_1) = g(\mathbf{s}_{IP}(x_1, y_1))$$

und
- Berechnen des Brillenglases (12, 44) unter Berücksichtigung der Sollvorgaben (g($\varphi_1$, $\psi_1$), f($x_1$, $y_1$), f($x'_1$, $y'_1$)) des ersten Brillenglaspunktes (32, ($x_1$, $y_1$), ($x'_1$, $y'_1$)) ausgehend von dem vorfertigen Brillenglas, wobei
die Sollvorgaben (g($\varphi_1$, $\psi_1$), f($x_1$, $y_1$), f($x'_1$, $y'_1$)) des ersten Durchstoßpunktes (32, ($x_1$, $y_1$), ($x'_1$, $y'_1$))

- eine maximal zulässige Differenz zwischen einem vorgegebenen Wert einer sphärischen Brechkraft und einem tatsächlichen Wert einer sphärischen Brechkraft in der vorgegebenen Gebrauchsstellung, und/oder

- eine maximal zulässige Differenz zwischen einem vorgegebenen Wert eines Astigmatismus und einem tatsächlichen Wert eines Astigmatismus in der vorgegebenen Gebrauchsstellung, und/oder
- eine maximal zulässige Differenz zwischen einem vorgegebenen Wert einer Zylinderachslage und einem tatsächlichen Wert einer Zylinderachslage in der vorgegebenen Gebrauchsstellung,

des Brillenglases (12, 44) umfassen,
der erste Sehstrahl (30) ein Strahl ist, welcher zumindest einen Pupillenmittelpunkt (24) und einen optischen Augendrehpunkt (20) eines Auges (10) schneidet und
$s_{IP}$ eine Koordinatentransformation ist, anhand welcher die Koordinaten $(x_1, y_1)$ des ersten Durchstoßpunktes (32) im Koordinatensystem des vorfertigen Brillenglases in Blickwinkel $(\varphi_1, \psi_1)$ des ersten augenseitigen Sehstrahls (30) unter Berücksichtigung von Individualparametern des vorfertigen Brillenglases in Gebrauchsstellung überführt werden.

8. Verfahren nach Anspruch 7, wobei

- die Koordinaten $(x_1, y_1)$ des ersten Durchstoßpunktes (32) kartesische Koordinaten sind,
- die Blickwinkel $(\varphi_1, \varphi_1)$ Kugelkoordinaten sind und wobei
- $s_{IP}$ eine Koordinatentransformation von kartesischen Koordinaten in Kugelkoordinaten ist.

9. Verfahren nach Anspruch 7 oder 8, wobei die Individualparameter zumindest Pupillendistanz und/oder Hornhautscheitelabstand und/oder Vorneigung des Brillenglases und/oder Fassungsscheibenwinkel umfassen.

10. Verfahren nach einem der Ansprüche 7 bis 9, wobei das Verfahren anhand von N verschiedenen Durchstoßpunkten (32, 40) durchgeführt wird, wobei an jedem Durchstoßpunkt (32, 40) genau ein Sehstrahl (30, 38) die Fläche (16, 46) des vorfertigen Brillenglases durchstößt und die jeweiligen Blickwinkel $((\varphi_1, \psi_1), (\varphi_2, \psi_2))$ der N Sehstrahlen (30, 38) voneinander verschieden sind.

11. Verfahren nach einem der Ansprüche 7 bis 10, wobei das Verfahren für ein jedes Brillenglas (12, 44) einer Serie von Brillengläsern (12, 44) wiederholt durchgeführt wird.

12. Verfahren nach einem der Ansprüche 7 bis 10, wobei in einem ersten Schritt

- zumindest ein Referenzdurchstoßpunkt $(x_R, y_R)$ einer Fläche eines Referenzbrillenglases in einem Koordinatensystem des Referenzbrillenglases bestimmt wird,
- jedem Referenzdurchstoßpunkt $(x_R, y_R)$ eine Sollvorgabe $f_R(x_R, y_R)$ zugeordnet wird,
- für jeden Referenzdurchstoßpunkt $(x_R, y_R)$ des Referenzbrillenglases in Gebrauchsstellung vor einem Auge ein Blickwinkel $(\varphi, \psi)$ eines augenseitigen Sehstrahls in dem Koordinatensystem des Auges bestimmt wird, welcher die Fläche des Referenzbrillenglases in dem jeweiligen Referenzdurchstoßpunkt $(x_R, y_R)$ durchstößt, wobei gilt:

$$(\varphi, \psi) = \mathbf{s}_{IP}(x_R, y_R),$$

- die Sollvorgabe $f_R(x_R, y_R)$ eines jeden Referenzdurchstoßpunktes $(x_R, y_R)$ des Referenzbrillenglases der Sollvorgabe $g(\varphi, \psi)$ des zugehörigen Sehstrahls zugeordnet wird, wobei gilt:

$$g(\varphi, \psi) = f_R(\mathbf{x}_{IP}(\varphi, \psi))$$

und
$x_{IP}$ eine Koordinatentransformation ist, anhand welcher die Blickwinkel $(\varphi, \psi)$ eines jeden Sehstrahls in Koordinaten $(x_R, y_R)$ eines entsprechenden Referenzdurchstoßpunktes im Koordinatensystem des entsprechenden Referenzbrillenglases unter Berücksichtigung von Individualparametern des entsprechenden Referenzbrillenglases in Gebrauchsstellung überführt werden.

13. Verfahren nach Anspruch 12, wobei das Verfahren nach dem ersten Schritt für zumindest ein von dem Referenzbrillenglas verschiedenes Brillenglas (12, 44) durchgeführt wird.

14. Verfahren nach einem der Ansprüche 12 oder 13, wobei das Verfahren nach dem ersten Schritt für ein jedes Brillenglas (12, 44) einer Serie von Brillengläsern (12, 44) wiederholt durchgeführt wird.

**Claims**

1. Series of spectacle lenses (12, 44), wherein each spectacle lens (12, 44) of the series comprises a surface (16, 46) facing the eye and a surface on the object side;
the surface facing the eye (16, 46) and/or that on the object side of each spectacle lens (12, 44) of the series is designed in such a manner that
in a standardised position of use of the spectacle lenses (12, 44) in front of eyes (10) of the respective spectacle wearers target values ($f(x_1, y_1)$, $f(x'_1, y'_1)$, $g(\varphi_1, \psi_1)$) at intersection points (32) of first viewing lines (30) with the respective surfaces facing the eye (16, 46) or on the object side of the spectacle lenses (12, 44) are substantially identical for each spectacle lens (12, 44) of the series;

each first viewing line (30) is a predetermined line on the eye side, which intersects a pupil centre point (24) and an optical centre of rotation (20) of the respective eye (10), and

all first viewing lines (30) have a predetermined identical viewing angle ($\varphi_1, \psi_1$) on the eye side; the target values ($f(x_1, y_1)$, $f(x'_1, y'_1)$, $g(\varphi_1, \psi_1)$) for each intersection point (32) comprise

• a maximum admissible difference between a given value of a spherical power and an actual value of a spherical power in the standardised position of use, and/or
• a maximum admissible difference between a given value of an astigmatism and an actual value of an astigmatism in the standardised position of use, and/or
• a maximum admissible difference between a given value of a cylinder axis position and an actual value of a cylinder axis position in the standardised position of use
of the respective spectacle lens (12, 44) of the series.

2. Series of spectacle lenses (12, 44) according to claim 1, wherein
the surface facing the eye (16, 46) and/or that on the object side of each spectacle lens (12, 44) of the series is additionally designed in such a manner that in the standardised position of use of the spectacle lenses (12, 44) in front of eyes (10) of the respective spectacle wearers target values at intersection points (40) of N-th viewing lines (38) with the respective surfaces facing the eye (16, 46) or on the object side of the spectacle lenses (12, 44) are substantially identical;
each N-th viewing line (38) is a predetermined line on the eye side, which intersects a pupil centre point (24) and an optical centre of rotation (20) of the respective eye (12),
all N-th viewing lines (38) have a predetermined identical viewing angle ($\varphi_2, \psi_2$) on the eye side, and viewing angles ($\varphi_2, \psi_2$) of all N-th viewing lines (38) are respectively different from the viewing angles ($\varphi_1, \psi_1$) of all the other viewing lines (30).

3. Series of spectacle lenses (12, 44) according to claim 2, wherein N = 2, preferably N = 5, particularly preferred N = 100.

4. Series of spectacle lenses (12, 44) according to one of the preceding claims 1 to 3, wherein all the spectacle lenses (12, 44) of the series have substantially the same addition.

5. Series of spectacle lenses (12, 44) according to one of the preceding claims, wherein the surface facing the eye (16, 46) and/or that on the object side of each spectacle lens (12, 44) of the series is different from the surface facing the eye (16, 46) and/or that on the object side of the respective other spectacle lenses (12, 44) of the series.

6. Series of spectacle lenses (12, 44) according to one of the preceding claims, wherein the surface facing the eye (16, 46) and/or that on the object side of each spectacle lens (12, 44) of the series is designed in such a manner that
in the standardised position of use of the spectacle lenses (12, 44) in front of eyes (10) of precisely one predetermined spectacle wearer target values ($f(x_1, y_1)$, $f(x'_1, y'_1)$, $g(\varphi_1, \psi_1)$) at intersection points (32) of first viewing lines (30) with the respective surfaces facing the eye (16, 46) or on the object side of the spectacle lenses (12, 44) are substantially identical.

7. Method for the production of a spectacle lens (12, 44) on the basis of a pre-prepared spectacle lens with the following steps:

• provision of a pre-prepared spectacle lens and specification of a position of use of the pre-prepared spectacle lens;
• specification of a first intersection point (32, ($x_1, y_1$), ($x'_1, y'_1$)) of a surface of the pre-prepared spectacle lens in a coordinate system of the pre-prepared spectacle lens;
• determination of a viewing angle ($\varphi_1, \psi_1$) of a first viewing line (30) on the eye side, which passes through the surface of the pre-prepared spectacle lens in the position of use in front of an eye (10) of a spectacle wearer in the first intersection point (32, ($x_1, y_1$), ($x'_1, y'_1$)), wherein the following applies:

$$(\varphi_1, \psi_1) = s_{IP}(x_1, y_1);$$

• specification of target values ($g(\varphi_1, \psi_1)$) of the first viewing line (30);
• assignment of the target values ($g(\varphi_1, \psi_1)$) of the first viewing line (30) as target values ($f(x_1, y_1)$, $f(x'_1, y'_1)$) of the first intersection point (32, ($x_1, y_1$), ($x'_1, y'_1$)) on the basis of the equation

$$f(x_1, y_1) = g(s_{IP}(x_1, y_1))$$

and

• calculation of the spectacle lens (12, 44) taking into consideration the target values (g($\varphi_1$, $\psi_1$), f($x_1$, $y_1$), f($x'_1$, $y'_1$)) of the first lens point (32, ($x_1$, $y_1$), ($x'_1$, $y'_1$)) working from the pre-prepared spectacle lens, wherein the target values (g($\varphi_1$, $\varphi_1$), f($x_1$, $y_1$), f($x'_1$, $y'_1$)) of the first intersection point (32, ($x_1$, $y_1$), ($x'_1$, $y'_1$)) comprise

• a maximum admissible difference between a given value of a spherical power and an actual value of a spherical power in the given position of use, and/or

• a maximum admissible difference between a given value of an astigmatism and an actual value of an astigmatism in the given position of use, and/or

• a maximum admissible difference between a given value of a cylinder axis position and an actual value of a cylinder axis position in the given position of use of the spectacle lens (12, 44), the first viewing line (30) is a line on the eye side, which intersects at least one pupil centre point (24) and an optical centre of rotation (20) of an eye (10), and

$s_{IP}$ is a transformation of coordinates, on the basis of which the coordinates ($x_1$, $y_1$) of the first intersection point (32) in the coordinate system of the pre-prepared spectacle lens are converted into viewing angles ($\varphi_1$, $\psi_1$) of the first viewing line (30) on the eye side taking into consideration individual parameters of the pre- prepared spectacle lens in the position of use.

8. Method according to claim 7, wherein

• the coordinates ($x_1$, $y_1$) of the first intersection point (32) are Cartesian coordinates,
• the viewing angles ($\varphi_1$, $\psi_1$) are spherical coordinates, and wherein
• $s_{IP}$ is a transformation of Cartesian coordinates into spherical coordinates.

9. Method according to claim 7 or 8, wherein the individual parameters comprise at least pupil distance and/or corneal vertex distance and/or forward inclination of the spectacle lens and/or frame-lens angle.

10. Method according to one of claims 7 to 9, wherein the method is conducted on the basis of N different intersection points (32, 40), wherein at each intersection point (32, 40) precisely one viewing line (30, 38) passes through the surface (16, 46) of the pre-prepared spectacle lens and the respective viewing angles (($\varphi_1$, $\psi_1$), ($\varphi_2$, $\psi_2$)) of the N viewing lines (30, 38) are different from one another.

11. Method according to one of claims 7 to 10, wherein the method is repeated for each spectacle lens (12, 44) of a series of spectacle lenses (12, 44).

12. Method according to one of claims 7 to 10, wherein in a first step

• at least one reference intersection point ($x_R$, $y_R$) of a surface of a reference spectacle lens is determined in a coordinate system of the reference spectacle lens,
• a target value $f_R(x_R, y_R)$ is assigned to each reference intersection point ($X_R$, $y_R$),
• for each reference intersection point ($X_R$, $y_R$) of the reference spectacle lens in the position of use in front of an eye a viewing angle ($\varphi$, $\psi$) of a viewing line on the eye side is determined in the coordinate system of the eye, which passes through the surface of the reference spectacle lens in the respective reference intersection point ($x_R$, $y_R$), wherein the following applies:

$$(\varphi, \psi) = s_{IP}(x_R, y_R);$$

• the target value $f_R(x_R, y_R)$ of each reference intersection point ($x_R$, $y_R$) of the reference spectacle lens is assigned to the target value g($\varphi$, $\psi$) of the corresponding viewing line, wherein the following applies:

$$g(\varphi, \psi) = f_R(x_{IP}(\varphi, \psi))$$

and

$x_{IP}$ is a transformation of coordinates, on the basis of which the viewing angles ($\varphi$, $\psi$) of each viewing line are converted into coordinates ($x_R$, $y_R$) of a corresponding reference intersection point in the coordinate system of the corresponding reference spectacle lens taking into consideration individual parameters of the corresponding reference spectacle lens in the position of use.

13. Method according to claim 12, wherein the method is conducted after the first step for at least one spectacle lens (12, 44) different from the reference spectacle lens.

14. Method according to one of claims 12 or 13, wherein the method is repeated after the first step for each spectacle lens (12, 44) of a series of spectacle lenses (12, 44).

**Revendications**

1. Série de verres de lunettes (12, 44), où

chaque verre de lunettes (12, 44) de la série comporte une face côté oeil (16, 46) et une face côté objet ;
la face côté oeil (16, 46) et/ou la face côté objet de chaque verre de lunettes (12, 44) de la série sont conçues de telle manière
que dans une position d'utilisation standardisée des verres de lunettes (12, 44) devant les yeux (10) de porteurs de lunettes respectifs, des valeurs de consigne ($f(x_1, y_1)$, $f(x'_1, y'_1)$, $g(\varphi_1, \psi_1)$) sur des points de pénétration (32) de premiers rayons visuels (30) sur chacune des faces côté oeil (16, 46) ou côté objet des verres de lunettes (12, 44) sont sensiblement identiques pour chaque verre de lunettes (12, 44) de la série ;
chaque premier rayon visuel (30) est un rayon côté oeil prédéfini, qui coupe un centre de pupille (24) et un centre de rotation (20) optique de chaque oeil (10), et
les premiers rayons visuels (30) présentent tous un angle de vision côté oeil ($\varphi_1, \psi_1$) prédéfini identique ;
les valeurs de consigne ($f(x_1, y_1)$, $f(x'_1, y'_1)$, $g(\varphi_1, \psi_1)$) pour chaque point de pénétration (32) comprennent

   - une différence maximale admissible entre une valeur de consigne d'une réfringence sphérique et une valeur effective d'une réfringence sphérique en position d'utilisation standardisée, et/ou
   - une différence maximale admissible entre une valeur de consigne d'un astigmatisme et une valeur effective d'un astigmatisme en position d'utilisation standardisée, et/ou
   - une différence maximale admissible entre une valeur de consigne d'une position d'axe du cylindre et une valeur effective d'une position d'axe du cylindre en position d'utilisation standardisée de chaque verre de lunettes (12, 44) de la série.

**2.** Série de verres de lunettes (12, 44) selon la revendication 1, où
la face côté oeil (16, 46) et/ou la face côté objet de chaque verre de lunettes (12, 44) de la série sont en outre conçues de telle manière
qu'en position d'utilisation des verres de lunettes (12, 44) devant les yeux (10) de porteurs de lunettes respectifs, des valeurs de consigne sur des points de pénétration (40) de Nièmes rayons visuels (38) sur chacune des faces côté oeil (16, 46) ou côté objet des verres de lunettes (12, 44) sont sensiblement identiques ;
chaque Nième rayon visuel (38) est un rayon côté oeil prédéfini, qui coupe un centre de pupille (24) et un centre de rotation (20) optique de chaque oeil (12),
tous les Nièmes rayons visuels (38) présentent tous un angle de vision côté oeil ($\varphi_2, \psi_2$) prédéfini identique, et
les angles de vision ($\varphi_2, \psi_2$) des Nièmes rayons visuels (38) diffèrent tous des angles de vision ($\varphi_1, \psi_1$) de tous les autres rayons visuels (30).

**3.** Série de verres de lunettes (12, 44) selon la revendication 2, où N = 2, préférentiellement N = 5, et tout particulièrement N = 100.

**4.** Série de verres de lunettes (12, 44) selon l'une des revendications 1 à 3, où les verres de lunettes (12, 44) de la série présentent tous une addition sensiblement identique.

**5.** Série de verres de lunettes (12, 44) selon l'une des revendications précédentes, où la face côté oeil (16, 46) ou la face côté objet de chaque verre de lunettes (12, 44) de la série est différente de la face côté oeil (16, 46) ou de la face côté objet des autres verres de lunettes (12, 44) de la série.

**6.** Série de verres de lunettes (12, 44) selon l'une des revendications précédentes, où la face côté oeil (16, 46) et/ou la face côté objet de chaque verre de lunettes (12, 44) de la série sont conçues de telle manière
qu'en position d'utilisation des verres de lunettes (12, 44) devant les yeux (10) d'un seul porteur de lunettes prédéfini, des valeurs de consigne ($f(x_1, y_1)$, $f(x'_1, y'_1)$, $g(\varphi_1, \psi_1)$) sur des points de pénétration (32) de premiers rayons visuels (30) sur chacune des faces côté oeil (16, 46) ou côté objet des verres de lunettes (12, 44) sont sensiblement identiques.

**7.** Procédé de fabrication d'un verre de lunettes (12, 44) à partir d'un verre de lunettes préfabriqué, comprenant les étapes suivantes :

   - spécification d'un verre de lunettes préfabriqué et d'une position d'utilisation du verre de lunettes préfabriqué ;
   - spécification d'un premier point de pénétration (32, ($x_1, y_1$), ($x'_1, y'_1$)) d'une face du verre de lunettes préfabriqué dans un système de coordonnées du verre de lunettes préfabriqué ;
   - détermination d'un angle de vision ($\varphi_1, \psi_1$) d'un premier rayon visuel côté oeil (30) qui pénètre la face du verre de lunettes préfabriqué en position d'utilisation devant un oeil (10) d'un porteur de lunettes sur le premier point de pénétration (32, ($x_1, y_1$), ($x'_1, y'_1$)), avec :

     ($\varphi_1, \psi_1$) = $S_{IP}(x_1, y_1)$ ;

   - spécification de valeurs de consigne ($g(\varphi_1, \psi_1)$) du premier rayon visuel (30) ;
   - association des valeurs de consigne ($g(\varphi_1, \psi_1)$) du premier rayon visuel (30) en tant que valeurs de consigne ($f(x_1, y_1)$, $f(x'_1, y'_1)$) du premier point de pénétration (32, ($x'_1, y_1$), ($x'_1, y'_1$)) sur la base

de l'égalité

$$f(x_1, y_1) = g(S_{IP}(x_1, y_1))$$

et

- calcul du verre de lunettes (12, 44) compte tenu des valeurs de consigne ($g(\varphi_1, \psi_1)$, $f(x_1, y_1)$, $f(x'_1, y'_1)$) du premier point de verre de lunettes (32, $(x_1, y_1)$, $(x'_1, y'_1)$) à partir du verre de lunettes préfabriqué,

les valeurs de consigne ($g(\varphi_1, \psi_1)$, $f(x_1, y_1)$, $f(x'_1, y'_1)$) du premier point de pénétration (32, $(x_1, y_1)$, $(x'_1, y'_1)$) comprenant

- une différence maximale admissible entre une valeur de consigne d'une réfringence sphérique et une valeur effective d'une réfringence sphérique en position d'utilisation spécifiée, et/ou

- une différence maximale admissible entre une valeur de consigne d'un astigmatisme et une valeur effective d'un astigmatisme en position d'utilisation spécifiée, et/ou

- une différence maximale admissible entre une valeur de consigne d'une position d'axe du cylindre et une valeur effective d'une position d'axe du cylindre en position d'utilisation spécifiée du verre de lunettes (12, 44),

le premier rayon visuel (30) étant un rayon qui coupe un centre de pupille (24) et un centre de rotation (20) optique d'un oeil (10), et

$S_{IP}$ étant une transformation de coordonnées sur la base de laquelle les coordonnées ($x_1, y_1$) du premier point de pénétration (32) dans le système de coordonnées du verre de lunettes préfabriqué sont transférées dans les angles de vision ($\varphi_1, \psi_1$) du premier rayon visuel côté oeil (30), compte tenu de paramètres individuels du verre de lunettes préfabriqué en position d'utilisation.

**8.** Procédé selon la revendication 7, où

- les coordonnées ($x_1, y_1$) du premier point de pénétration (32) sont des coordonnées cartésiennes,
- les angles de vision ($\varphi_1, \psi_1$) sont des coordonnées sphériques, et où
- $S_{IP}$ est une transformation de coordonnées cartésiennes en coordonnées sphériques.

**9.** Procédé selon la revendication 7 ou 8, où les paramètres individuels comprennent au moins la distance interpupillaire et/ou la distance oeil-verre et/ou l'inclinaison du verre de lunettes et/ou l'angle monture-verre.

**10.** Procédé selon l'une des revendications 7 à 9, où ledit procédé est exécuté sur la base de N points de pénétration (32, 40) différents, où sur chaque point de pénétration (32, 40) un seul rayon visuel (30, 38) pénètre la face (16, 46) du verre de lunettes préfabriqué et où les angles de vision (($\varphi_1, \psi_1$), ($\varphi_2, \psi_2$)) respectifs des N rayons visuels (30, 38) diffèrent les une des autres.

**11.** Procédé selon l'une des revendications 7 à 10, où ledit procédé est exécuté de manière répétée pour chaque verre de lunettes (12, 44) d'une série de verres de lunettes (12, 44).

**12.** Procédé selon l'une des revendications 7 à 10, où, lors d'une première étape,

- au moins un point de pénétration de référence ($x_R, y_R$) d'une face d'un verre de lunettes de référence est déterminé dans un système de coordonnées du verre de lunettes de référence,
- à chaque point de pénétration de référence ($x_R, y_R$) est associée une valeur de consigne $f_R(x_R, y_R)$,
- pour chaque point de pénétration de référence ($x_R, y_R$) du verre de lunettes de référence en position d'utilisation devant un oeil, un angle de vision ($\varphi, \psi$) d'un rayon visuel côté oeil est déterminé dans le système de coordonnées de l'oeil, lequel traverse la face du verre de lunettes de référence sur la point de pénétration de référence ($x_R, y_R$) correspondant, avec :

$$(\varphi, \psi) = S_{IP}(x_R, y_R),$$

- la valeur de consigne $f_R(x_R, y_R)$ de chaque point de pénétration de référence ($x_R, y_R$) du verre de lunettes de référence est associée à la valeur de consigne $g(\varphi, \psi)$ du rayon visuel correspondant, avec :

$$g(\varphi, \psi) = f_R(X_{IP}(\varphi, \psi))$$

et où

$X_{IP}$ est une transformation de coordonnées sur la base de laquelle les angles de vision ($\varphi, \psi$) de chaque rayon visuel sont transférés dans des coordonnées ($x_R, y_R$) d'un point de pénétration de référence correspondant dans le système de coordonnées du verre de lunettes de référence correspondant, compte tenu de paramètres individuels du verre de lunettes de référence en position d'utilisation.

**13.** Procédé selon la revendication 12, où ledit procédé est exécuté après la première étape pour au moins un verre de lunettes (12, 44) différent du verre de lunettes de référence.

14. Procédé selon la revendication 12 ou 13, où ledit procédé est exécuté après la première étape de manière répétée pour chaque verre de lunettes (12, 44) d'une série de verres de lunettes (12, 44).

Figur 1

Figur 2

EP 1 894 056 B1

Figur 3

21

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3960442 A